# FASCICULE DE BREVET EUROPEEN

(11) **EP 3 250 652 B1**
(45) Date de publication et mention de la délivrance du brevet: **29.04.2020**
(21) Numéro de dépôt: 16701781.3
(22) Date de dépôt: 27.01.2016
(51) Int. Cl.: C09D 129/04, C08K 9/10, C09K 5/06

(54) **MÉLANGE THERMORÉGULANT**
THERMOREGULIERENDE ZUSAMMENSETZUNG
THERMOREGULATING COMPOSITION

(30) Priorité: 28.01.2015 FR 1550644
(43) Date de publication de la demande: 06.12.2017
(73) Titulaire: MCI Technologies, 22440 Ploufragan (FR)
(72) Inventeur: LEUCK, Hervé, 22950 Tregueux (FR); FAUBRY, Eric, 22950 Tregueux (FR)
(74) Mandataire: Cabinet Le Guen Maillet
(86) Numéro de dépôt international: PCT/EP2016/051722
(87) Numéro de publication internationale: WO 2016/120340

(56) Documents cités:
- CN-A- 101 455 856
- FR-A1- 2 995 315
- US-A1- 2009 227 451

## Description

La présente invention concerne un produit thermorégulant, constituant en particulier un enduit ou une peinture.

Il est connu d'utiliser des microcapsules remplies d'un matériau à changement de phase (MCP) et noyées dans un liant pour assurer une meilleure régulation thermique. Par exemple, un enduit comportant de tels matériaux à changement de phase micro-encapsulés (MCPM) et déposé sur les murs d'une pièce permet, en hiver, de stocker la température sous forme de chaleur latente puis de la restituer dans le temps, et, en été, d'absorber la chaleur lors de pics de température retardant ainsi la surchauffe de la pièce.

Cependant, à cause des différentes manipulations, il arrive qu'un certain nombre de microcapsules éclatent et laissent s'écouler le liquide constituant le MCP. De tels écoulements créent sur l'enduit une surface huileuse qui n'est pas esthétique et qui peut gêner le collage d'un papier peint par exemple.

Le document FR-A-2 995 315 divulgue un mélange contenant un liant et des microcapsules contenant un liquide constituant un MCP. Dans ce document, le liant est à base d'eau et d'alcool polyvinylique.

Un objet de la présente invention est de proposer un produit thermorégulant contenant des MCPM et qui, en cas de rupture des microcapsules, évite la diffusion du liquide dans le produit thermorégulant.

A cet effet, est proposé un mélange contenant un liant à base de polymère ou copolymère hydrophile et des microcapsules contenant un liquide constituant un matériau à changement de phase et noyées dans ledit liant, ledit mélange étant caractérisé en ce que le polymère ou copolymère hydrophile utilisé est un alcool polyvinylique carboxylé.

L'invention propose également un enduit contenant un mélange selon la variante précédente.

L'invention propose également une peinture contenant un mélange selon la variante précédente.

L'invention concerne un mélange formant un produit thermorégulant et contenant un liant à base de polymère ou copolymère hydrophile et des microcapsules contenant un liquide constituant un matériau à changement de phase et noyées dans ledit liant.

Ainsi, même en cas de rupture d'une microcapsule, le liquide qu'elle contient ne migre pas à l'interface du produit thermorégulant.

Le polymère ou copolymère hydrophile, n'ayant aucune affinité chimique avec le liquide hydrophobe utilisé comme matériau à changement de phase, crée, dans le produit thermorégulant, une barrière que ledit liquide ne peut franchir.

Selon un mode de réalisation préféré, le polymère ou copolymère hydrophile utilisé est un alcool polyvinylique carboxylé qui est un produit filmogène vis-à-vis de liquides, corps gras et solvants.

Un alcool polyvinylique carboxylé comporte trois groupements chimiques :
- un groupement hydroxylé (-OH) qui assure un effet barrière anti-graisse à cause d'un encombrement stérique assez faible et une forte polarité,
- un groupement acetoxylé (-O-COCH3) qui est présent car il constitue un motif de départ sur la chaîne carbonée, et
- un groupement carboxylé (-COOH) qui renforce l'effet barrière anti-graisse par sa forte polarité et qui du fait de son caractère anionique constitue un excellent dispersant.

En outre, le groupement carboxylé possède des propriétés filmogènes.

La polarité et le caractère anionique des groupements carboxylés créent respectivement des liaisons de Van der Waals et des liaisons hydrogènes qui stabilisent le milieu en faisant baisser la tension superficielle de celui-ci.

Le haut degré d'hydrolyse de l'alcool polyvinylique carboxylé apporte au film son effet barrière anti-graisse.

Ainsi, la combinaison de ces deux effets (effet barrière et filmogène) font des alcools polyvinyliques carboxylés d'excellents agents anti-graisse.

La fonction carboxylique permet de rendre l'alcool polyvinylique carboxylé à haut degré d'hydrolyse plus soluble dans l'eau ce qui facilite son entraînement vers la surface de l'enduit ou de la peinture lors du séchage en étant entraîné par l'eau. L'alcool polyvinylique carboxylé se concentre alors en surface créant ainsi un film homogène.

Un enduit ou une peinture réalisé à partir d'un tel mélange peut donc être facilement appliqué, travaillé et recouvert puisqu'aucun écoulement huileux ne vient altérer sa capacité d'adhésion.

Selon un exemple, pour fabriquer 100 kg d'un enduit contenant des matériaux à changement de phase, on verse dans un contenant muni d'un agitateur :
53,65 kg de produits à changement de phase micro-encapsulés sous forme liquide (extrait sec compris entre 50 et 55%),
14,71 kg d'un concentré de dioxyde de titane à 80% en masse,
21,63 kg d'alcool polyvinylique carboxylé à 15% dans de l'eau déminéralisée (par exemple POVAL KL318 ou POVAL 25-88KL de chez Kuraray).

Après quoi, le mélange est transféré dans un mélangeur à ruban, où sont ajoutés 9,99 kg de fibre cellulosique de type Alpha Cell C10-SS de chez International Fiber Europe NV afin d'obtenir une pâte.

## Revendications

1. Mélange contenant un liant à base de polymère ou copolymère hydrophile et des microcapsules contenant un liquide constituant un matériau à changement de phase et noyées dans ledit liant, ledit mélange étant **caractérisé en ce que** le polymère ou copolymère hydrophile utilisé est un alcool polyvinylique carboxylé.

2. Enduit contenant un mélange selon la revendication 1.

3. Peinture contenant un mélange selon la revendication 1.

## Patentansprüche

1. Mischung, enthaltend ein Bindemittel auf Basis eines hydrophilen Polymers oder Copolymers und Mikrokapseln, die eine aus einem Phasenwechselmaterial bestehende Flüssigkeit enthalten und in das Bindemittel eingebettet sind, wobei die Mischung **dadurch gekennzeichnet ist, dass** es sich bei dem verwendeten hydrophilen Polymer oder Copolymer um einen carboxylierten Polyvinylalkohol handelt.

2. Beschichtung, enthaltend eine Mischung nach Anspruch 1.

3. Anstrichmittel, enthaltend eine Mischung nach Anspruch 1.

## Claims

1. Mixture containing a binder based on a hydrophilic polymer or copolymer and microcapsules containing a liquid constituting a phase-change material and that are embedded in said binder, said mixture being **characterized in that** the hydrophilic polymer or copolymer used is a carboxylated polyvinyl alcohol.

2. Coating containing a mixture according to Claim 1.

3. Paint containing a mixture according to Claim 1.
